# EUROPEAN PATENT SPECIFICATION

(11) **EP 0 375 137 B1**
(45) Date of publication and mention of the grant of the patent: **07.07.1993**
(21) Application number: 89311640.0
(22) Date of filing: 10.11.1989
(51) Int. Cl.: B62D 6/00

(54) **Electromagnetic control apparatus for varying the driver steering effort of a hydraulic power steering apparatus**
Elektromagnetische Regelungsvorrichtung zum Verändern der Lenkkraft in einer hydraulischen Servolenkvorrichtung
Appareil électromagnétique de contrôle pour faire varier l'effort de direction du conducteur dans un appareil de direction assisté hydrauliquement

(30) Priority: 22.12.1988 US 288661; 10.08.1989 US 390635
(43) Date of publication of application: 27.06.1990
(73) Proprietor: GENERAL MOTORS CORPORATION, Detroit Michigan 48202 (US)
(72) Inventor: Graber, David Wayne, Millington Michigan 48746 (US); Pawlak, Andrzej Marian, Troy Michigan 48098 (US); Zuraski, Jeffery Alan, Saginaw Michigan 48603 (US)
(74) Representative: Denton, Michael John

(56) References cited:
- DE-A- 1 514 227
- PATENT ABSTRACTS OF JAPAN vol. 10, no. 204 (M-499)(2260) 17 July 1986, & JP-A-61 46764 (ATSUGI MOTOR PARTS) 07 March 1986,
- PATENT ABSTRACTS OF JAPAN vol. 11, no. 228 (M-610)(2675) 24 July 1987, & JP-A-62 43364 (TOYODA MACH WORKS) 25 February 1987,
- PATENT ABSTRACTS OF JAPAN vol. 11, no. 86 (M-572)(2533) 17 March 1987, & JP-A-61 241271 (NIPPON SEIKO) 27 October 1986,
- PATENT ABSTRACTS OF JAPAN vol. 10, no. 370 (E-463)(2427) 10 December 1986, & JP-A-61 164448 (TOSHIBA) 25 July 1986,
- PATENT ABSTRACTS OF JAPAN vol. 11, no. 238 (M-613)(2685) 05 August 1987, & JP-A-62 50278 (TOYODA) 04 March 1987,

## Description

This invention relates to an automotive hydraulic power assist steering apparatus, and more particularly to an electromagnetic control apparatus for varying the driver steering effort required to produce a given level of power assist.

The conventional hydraulic power assist steering apparatus comprises a hydraulic actuator for moving the steering linkage in relation to the fluid flow supplied thereto, and a rotary hydraulic control valve assembly for controlling fluid flow to the actuator in relation to the operator exerted steering torque. The control valve generally includes a cylindrical valve body rotatable within the valve housing and a valve spool rotatably disposed within the valve body. Hydraulic fluid is supplied to a cavity formed in the valve spool, and the valve body is grooved to receive fluid flow in relation to the amount of relative rotation between valve spool and valve body. The fluid so received is then directed to the actuator so that steering assist is developed in relation to the relative rotation of the valve body and valve spool.

The valve spool is manually rotated by the operator of the vehicle and is connected to mechanically drive the steering linkage through a lost motion coupling. A resilient element, such as a torsion bar, couples the valve spool and valve body to provide a centring force for aligning the valve spool and valve body and to permit relative rotation therebetween in relation to operator exerted steering torque, at least within the limitations of the lost motion coupling.

In apparatus of the type described above, the level of driver steering effort assist required to produce a given level of power assist depends primarily on the compliance of the torsion bar. If the torsion bar has relatively high compliance, a relatively low level of driver steering effort is required. This is generally desirable in low speed operation of a vehicle where relatively high steering forces are required. If the torsion bar has relatively low compliance, a relatively high level of driver steering effort is required. This is generally desirable in high speed operation of a vehicle where relatively low steering forces are required.

To overcome the engineering trade-off described above, various arrangements have been proposed for varying the driver steering effort for a given level of power assist as a function of vehicle speed. An example of one such arrangement is given in US Patent No 4,629,025. In that arrangement, a controlled portion of the hydraulic fluid pump output is returned to the reservoir of the fluid pump to reduce fluid flow to the steering actuator with increasing vehicle speed.

JP-A-61-46764 discloses a steering system comprising an electromagnetic control apparatus for varying the driver steering effort in accordance with the preamble of claim 1.

Hydraulic power assist steering apparatus in accordance with the present invention comprises a pair of hydraulic elements which are relatively rotatable and which are connected between a steering shaft and a steering gear such that driver steering effort applied to the steering shaft produces a relative rotation of the hydraulic elements for generating hydraulic flow in relation to the desired level of power assist steering force; apparatus for rotatably coupling the hydraulic elements comprising mechanically resilient means coupling the hydraulic elements to develop a mechanical centring force which is rotationally balanced in the centred relative position of the hydraulic elements, but which resists relative rotation therefrom; permanent magnetic means supported for rotation with one of the pair of hydraulic elements to define a rotary set of alternate polarity permanent magnetic poles; and electromagnetic means including an exciting coil, a core, and a set of electromagnetic pole elements disposed in close proximity to the permanent magnetic poles, the electromagnetic pole elements being supported for rotation with the other of said pair of hydraulic elements relative to said permanent magnetic poles; said hydraulic power assist steering apparatus being characterised in that the core encircles the exciting coil and the electromagnetic pole elements are of alternate polarity such that the minimum reluctance flux path between the electromagnetic pole elements and the permanent magnetic poles occurs when the hydraulic elements are in a centred relation for minimum hydraulic flow; and further comprising control means for energizing the exciting coil with direct current to control the magnetic polarity and strength of the electromagnetic poles, whereby the electromagnetic and permanent magnet poles cooperate to produce a variable magnetic centring torque in relation to the displacement of the hydraulic elements and the energization of the exciting coil, and the overall coupling between the hydraulic elements is defined by the combination of the magnetic and mechanical centring torques.

The present invention is directed to a hydraulic power assist steering apparatus having conventional relatively rotatable valve spool and valve body elements for flow regulation, and an integral electromagnetic mechanism which defines a coupling of variable resilience between the spool and valve body for adjusting driver steering effort required to produce a given level of power assist.

The integral electromagnetic mechanism of this invention comprises first and second magnetic assemblies. The first magnetic assembly includes a rotary multipole permanent magnet ring supported for rotation with one of the spool and valve body elements. The second magnetic assembly includes a rotary flux conducting element supported for rotation with the other of the spool and valve body elements and a stationary exciting coil magnetically coupled thereto.

In one of the illustrated embodiments, the rotary permanent magnet of the first magnetic assembly is in the form of a ring magnet having N alternating polarity magnetic regions (poles) about its outer circumference, and the rotary flux conducting element of the second magnetic assembly is defined by a core piece magnetically coupled to the exciting coil and having N interleaved teeth or electromagnetic poles. Adjacent permanent magnet regions are magnetically coupled (either internally or by an external flux conducting ring), and the interleaved teeth of the rotary flux conducting element are disposed in close proximity to such regions to define a working air gap therebetween.

When the exciting coil is energized with direct current, the interleaved teeth define N alternating polarity electromagnetic poles which interact with the poles of the permanent magnet. The flux path circles the coil, passing through the electromagnetic and permanent magnet poles and the core piece of the rotary flux conducting element.

The electromagnetic and permanent magnet poles are oriented such that when the spool and valve body elements are centered and the exciting coil is energized with a first polarity of current, opposite polarity electromagnetic and permanent magnet poles are radially aligned. This produces an attractive force between the electromagnetic and permanent magnet poles, and a positive magnetic centering torque when there is relative displacement of the spool and valve body elements, which torque tends to restore the assembly to the centered position. When the coil is energized with current of the opposite polarity, the radially aligned electromagnetic and permanent magnet poles are of the same polarity. This produces a repulsive force between the electromagnetic and permanent magnet poles, and a negative magnetic centring torque when there is relative displacement of the spool and valve body elements, which torque tends to further displace the assembly. In either case, the magnitude of the magnetic centring torque is variable over a wide range depending on the magnitude of current supplied to the coil.

Alternatively, the integral electromagnetic mechanism of this invention comprises first and second magnetic assemblies. The first magnetic assembly includes a rotary multipole permanent magnet supported for rotation with the spool element. The second magnetic assembly includes a magnetically coupled exciting coil and flux conducting element. The flux conducting element is supported for rotation with the valve body element, and the exciting coil is disposed in a flux conducting core supported in the steering gear housing.

In the illustrated embodiments of this alternative, the rotary permanent magnet of the first magnetic assembly is in the form of a ring magnet mounted on the spool via a nonmagnetic spacer. The ring magnet has N alternating polarity permanent magnet pole about its outer diameter, circumferentially adjacent poles being magnetically coupled either internally or by a flux conducting ring disposed between the spacer and the inner diameter of the magnet. The rotary flux conducting element of the second magnetic assembly is defined by N interleaved teeth (electromagnetic poles) disposed between the outer diameter of the ring magnet and the inner diameter of the exciting coil, and a pair of flux gathering pole surfaces disposed on either axial end of the interleaved teeth. The rotary interleaved teeth and flux gathering pole surfaces are magnetically coupled to the rotary permanent magnet poles and the stationary flux conducting core, respectively.

The orientation of the permanent magnet poles and interleaved teeth is such that the minimum reluctance flux path therebetween occurs when the spool and valve are in a centred relation for minimum hydraulic flow. The reluctance increases when the spool and valve are relatively displaced from said centred relation, thereby producing a magnetic centring torque which tends to restore the spool and valve to such centred relation.

When the exciting coil is energized with direct current, the interleaved teeth define N alternating polarity electromagnetic poles which interact with the permanent magnet poles. The flux path circles the coil, passing through the electromagnetic and permanent magnet poles and the flux gathering pole surfaces of the rotary flux conducting element.

When the spool and valve are centred and the exciting coil is energized with a first polarity of current, opposite polarity electromagnetic and permanent magnet poles are radially aligned. This produces an attractive force between the electromagnetic and permanent magnet poles, and a positive magnetic centring torque when there is relative displacement of the spool and valve, which torque tends to restore the assembly to the centred position. When the coil is energized with current of the opposite polarity, the radially aligned electromagnetic and permanent magnet poles are of the same polarity. This produces a repulsive force between the electromagnetic and permanent magnet poles, and a negative magnetic centring torque when there is relative displacement of the spool and valve, which torque tends to further displace the assembly. In either case, the magnitude of the magnetic centring torque is variable over a wide range depending on the magnitude of current supplied to the coil.

In the illustrated embodiments, the mechanism of this invention is used in combination with a conventional torsion bar to define a variable resiliency coupling between the hydraulic fluid supply elements. The torsion bar provides a mechanical centring torque which defines a coupling of intermediate resilience which tends to restore the assembly to the centred position when there is relative displacement of the spool and valve body elements. This generates an intermediate level of steering assist for a given driver steering input. Variably energizing the exciting coil with current of the first polarity produces positive magnetic centring torque which variably increases the resilience of the coupling so that more driver steering effort is required to produce a given level of power assist. Variably energizing the exciting coil with current of the opposite polarity produces negative centring torque which variably decreases the resilience of the coupling so that less driver steering effort is required to produce a given level of power assist. Preferably, the coil energization is scheduled in relation to the speed of the vehicle so that the level of steering assist decreases with increasing vehicle speed. A driver preference input may also be used.

The present invention will now be described, by way of example, with reference to the accompanying drawings, in which:-
Figure 1a is a sectional view of a hydraulic control valve assembly incorporating the integral electromagnetic mechanism according to a first embodiment of this invention, and a block diagram of a computer-based control unit therefor;
Figure 1b is a section of the valve assembly of Figure 1a along the line 1b -- 1b;
Figures 1c and 1d depict alternate permanent magnet configurations;
Figures 2a - 2d schematically depict linearized views of the electromagnetic and permanent magnet poles of the electromagnetic mechanism depicted in Figures 1a - 1c;
Figure 3 depicts the centring force generated by the electromagnetic mechanism of Figure 1 as a function of steering shaft rotation for a given coil current;
Figure 4 depicts the variation in driver steering effort achieved by the control valve and computer based control unit of Figure 1 for various vehicle speeds;
Figure 5 is a perspective view of the electromagnetic mechanism of Figures 1a - 1c;
Figure 6 is a flow diagram representative of computer program instructions executed by the computer based control unit of Figure 1a in controlling the excitation of the electromagnetic mechanism of this invention;
Figure 7a is a sectional view of a hydraulic control valve assembly incorporating an integral electromagnetic mechanism according to a second embodiment of this invention, and a block diagram of a computer-based control unit therefor;
Figure 7b is a sectioned perspective view of the electromagnetic mechanism depicted in Figure 7a;
Figure 8a is a sectional view of a hydraulic control valve assembly incorporating an integral electromagnetic mechanism according to a third embodiment of this invention, and a block diagram of a computer-based control unit therefor; and
Figure 8b is a sectioned perspective view of the electromagnetic mechanism depicted in Figure 8a.

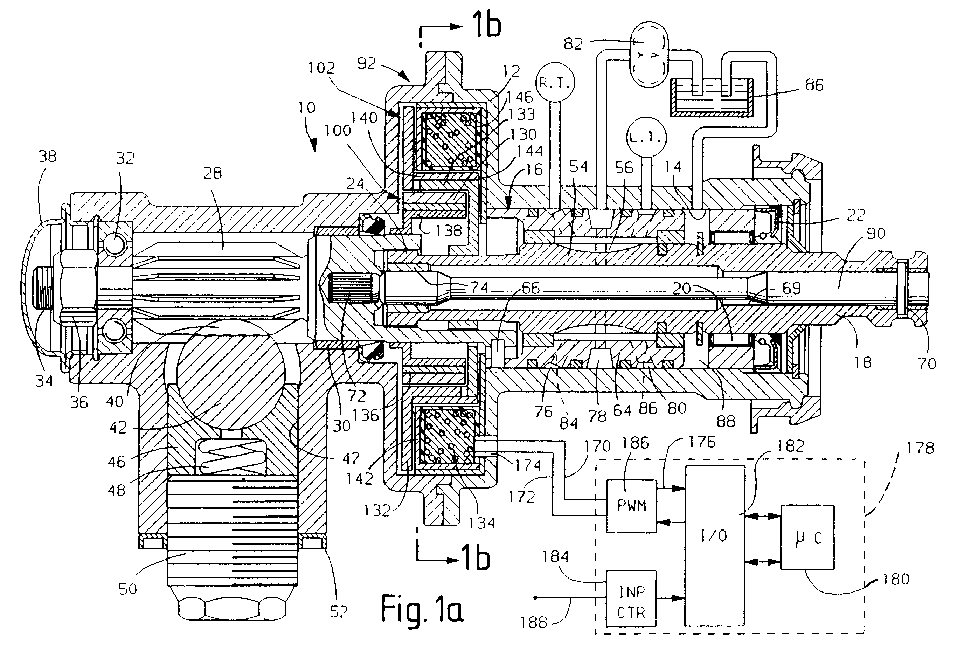

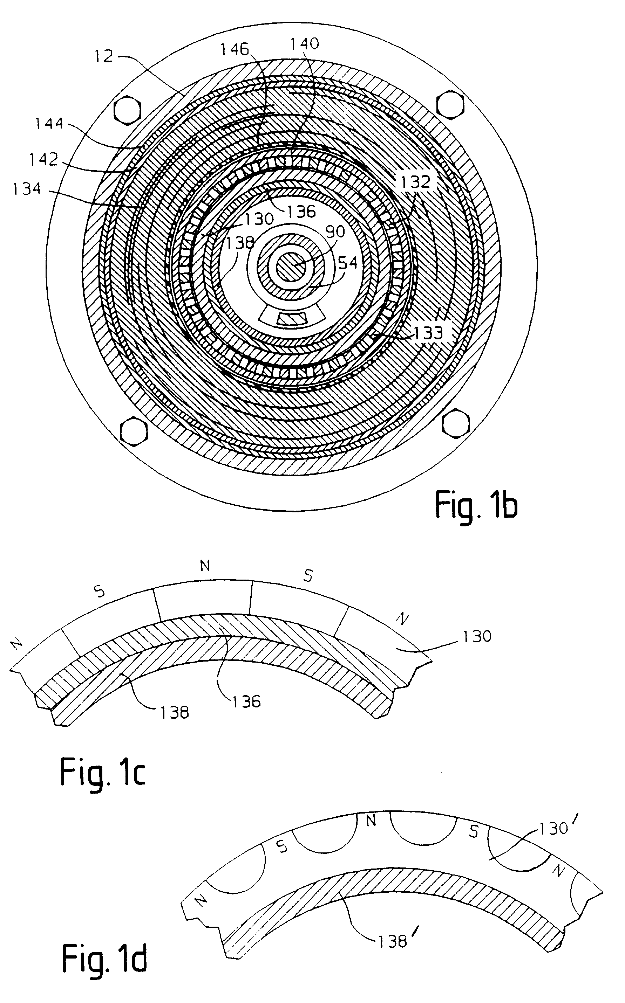

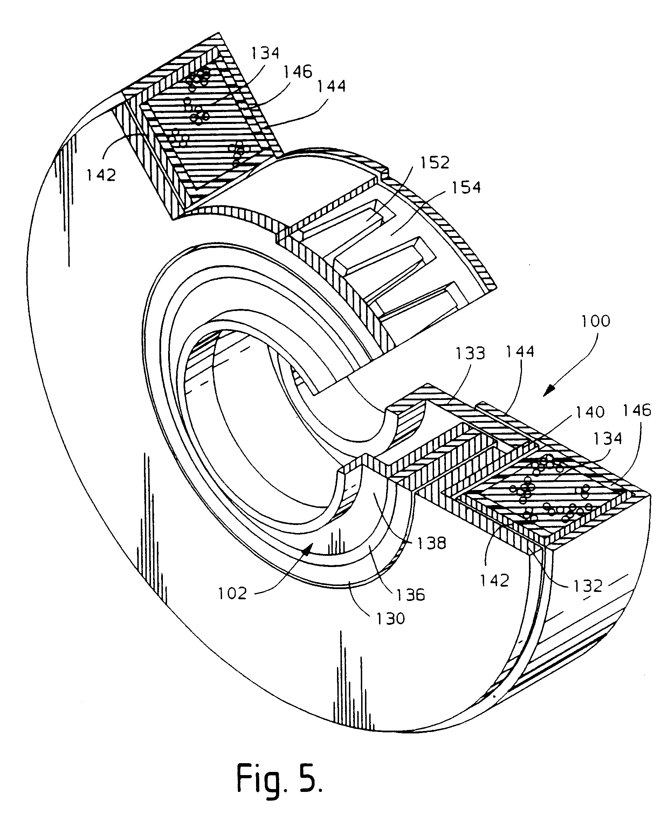

Referring particularly to Figures 1a, 1b and 5, the reference numeral 10 generally designates a portion of a (motor vehicle hydraulic power assist rack and pinion) steering gear. The steering gear 10 is disposed within a two-piece housing 12 having a (cylindrical smooth wall) bore 14 formed therein. A (cylindrical rotary power steering gear) valve assembly 16 disposed within the bore 14 includes an (elongated cylindrical) spool shaft 18 mounted for turning movement in the two-piece housing 12 by a bearing assembly 20. The inboard end of spool shaft 18 projects through an annular fluid seal 22 for connection to a conventional steering shaft and operator manipulated handwheel, not shown.

The outboard end of the spool shaft 18 is splined as indicated by the reference numeral 24 with an (elongated) pinion gear 28 to define a lost motion mechanical coupling therebetween. The pinion gear 28 is rotatably mounted in the two-piece housing 12 by a sleeve bearing 30 and a ball bearing assembly 32 which receives a shank portion 34 of pinion gear 28. A nut 36 threaded onto the outboard end of the shank portion 34 secures the pinion gear 28 with the housing 12. A cup-like cover 38 frictionally fits into the end of the two-piece housing 12 to provide service access.

The teeth of pinion gear 28 mesh with a toothed portion 40 of an (elongated) rack 42 mounted for linear sliding movement within the two-piece housing 12. The rack 42 is operatively connected to the steerable wheels of the vehicle by suitable ball joints and tie rods, not shown. In such an arrangement, the linear movement of the rack 42 turns the steerable wheels of the vehicle for vehicle steering purposes.

The rack 42 is also coupled to a fluid operated power cylinder mechanism or actuator, not shown, for applying a steering assist force to rack 42. As described below, the (power steering) valve assembly 16 is adapted to direct hydraulic fluid to right or left turn chambers of the power cylinder to apply right-hand or left-hand steering assist force to rack 42. A power cylinder meeting the above description is described in detail in US Patent No 4,454,801, such patent being incorporated herein by reference.

Close meshing engagement between the teeth of the pinion gear 28 and the rack 42 is achieved by a rack contact shoe 46 which is slidably mounted in a housing bore 47. A helical spring 48 seated between the rack contact shoe 46 and an adjusting plug 50, tensions the rack contact shoe 46. Adjusting plug 50 is threaded into the end of housing bore 47 and can be axially adjusted therein to vary the spring force. An adjuster plug nut 52 maintains the adjusting plug 50 in a selected position.

The spool shaft 18 of the (power steering) valve assembly 16 has a (cylindrical) valve spool 54 formed thereon. The valve spool 54 has a plurality of (arcuate, axially extending) oil transfer slots 56 formed in the periphery thereof. The valve assembly 16 also includes a (cylindrical) valve body 64 rotatably mounted within bore 14 on the valve spool 54. The outboard end of the valve body 64 extends over the end of the pinion gear 28 and is drivingly connected thereto by a radial pin 66. Valve spool 54 and valve body 64 define hydraulic elements.

The valve body 64 defines right turn, supply and left turn chambers 76, 78, 80 respectively between it and the bore 14. A hydraulic pump 82 supplies fluid to the supply chamber 78 and such fluid is directed to the right turn and left turn chambers 76, 80 via the oil transfer slots 56 of valve spool 54 and drilled passages 84 and 86, depending on the direction and degree of relative rotation between valve spool 54 and valve body 64. The right turn and left turn chambers 76, 80 are connected to the right (RT) and left (LT) chambers of the power cylinder (actuator) as indicated for generating a corresponding level of steering assist force in rack 42 as described above. An exhaust passage chamber 88 returns hydraulic fluid to a fluid reservoir 86 of the hydraulic pump 82. A detailed description of the valve assembly 16 and the hydraulic system thereof is set forth in the above-referenced US Patent No 4,454,801.

A resilient centring coupling between the valve spool 54 and valve body 64 is provided by the combined operation of a torsion bar 90 (mechanically resilient means) and the electromagnetic mechanism of this invention, generally designated by the reference numeral 92. Together, the torsion bar 90 and electromagnetic mechanism 92 permit the valve spool 54 to be rotated relative to the valve body 64 in relation to the operator exerted steering torque so that the valve assembly 16 directs fluid to the power cylinder (not shown) for producing the desired level of steering assist force. On termination of the operator exerted steering torque, the torsion bar 90 and electromagnetic mechanism 92 centre the valve body 64 and valve spool 54 to terminate steering assist force.

The torsion bar 90 extends concentrically through an axial opening 69 in the spool shaft 18. A cross pin 70 connects the input end of torsion bar 90 to spool shaft 18. The output end of torsion bar 90 is splined and staked at 72 to the pinion gear 28. Bearing sleeve 74 supports the inner end of the spool shaft 18 on a cylindrical portion of the torsion bar 90.

The electromagnetic mechanism 92 comprises first and second magnetic assemblies generally designated by the reference numerals 100 and 102. The first magnetic assembly 100 (permanent magnet means) includes a (rotary multipole permanent) ring magnet 130 supported for rotation with the pinion gear 28 and valve body 64. The second magnetic assembly 102 (electromagnetic means) includes a pair of (rotary flux conducting) core elements 132, 133 supported for rotation with the valve spool 54 and a (stationary) exciting coil 134 magnetically coupled thereto.

The ring magnet 130 is radially magnetized to define N alternating polarity permanent magnetic poles about its outer circumference. This may be achieved with a radially magnetized magnet 130, as schematically depicted in Figure 1c, supported on a (flux conducting) backing ring 136. The backing ring 136 magnetically couples opposite polarity poles of the radially magnetised magnet 130. The combination of the radially magnetised magnet 130 and backing ring 136 is supported for rotation with the valve body 64 on a non-magnetic hub 138, which is secured to the inboard end of the pinion gear 28.

Alternatively, the ring magnet 130' may be internally magnetized as schematically depicted in Figure 1d in a series of U-shaped patterns so that all of the magnetic poles are defined on the outer circumference of the ring magnet. In this case, a flux conducting backing ring, such as the backing ring 136 of Figure 1c, is not required and the ring magnet 130' may be supported directly on a non-magnetic hub such as the hub 138'.

The (rotary flux conducting) core elements 132, 133 of the second magnetic assembly 102 are mechanically coupled by a non-magnetic ring 140. The core element 133 is secured to the valve spool 54 to support the core element assembly for rotation therewith. The core element 132 is magnetically coupled to the exciting coil 134 via a (stationary) pole piece 142, and the core element 133 is magnetically coupled to the exciting coil 134 via a (stationary) pole piece 144. The exciting coil 134 is wound in an insulating bobbin 146, and has lead ends 170, 172 passing through a suitable opening 174 in the two-piece housing 12 for connection to a computer-based control unit 178 (control means), described below.

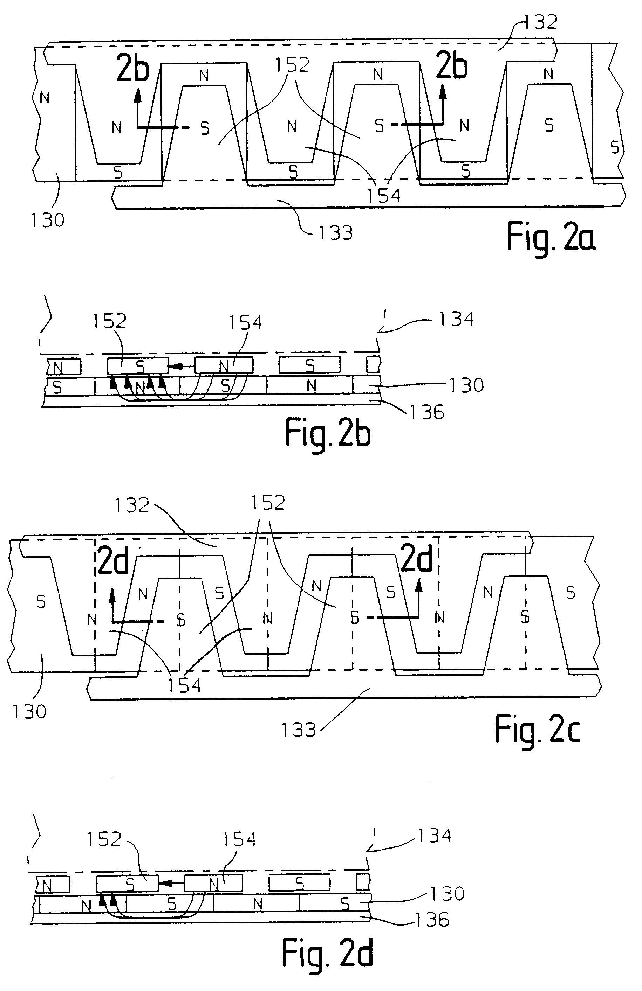

As best seen in the perspective view of Figure 5, the core elements 132, 133 each have (N/2 axially extending claw-pole) teeth 152, 154 which interleave to define a total of N electromagnetic poles. The teeth 152, 154 are disposed in close proximity to the outer radial circumference of the ring magnet 130, defining a working air gap therebetween. When the exciting coil 134 is energized with direct current of a first polarity, the teeth 152, 154 assume alternate magnetic polarities as indicated in the linearized representations of Figures 2a - 2d, and magnetic flux flows in a flux path comprising the ring magnet 130 and backing ring 136, the (rotary) core element 132, (via teeth 152), the (stationary) pole pieces 142, 144 and the (rotary) core element 133 (via teeth 154). The radially attractive magnetic forces are balanced due to symmetry. The teeth 152, 154 define alternate polarity electromagnetic pole elements.

Referring to Figures 2a and 2b, the first and second magnetic assemblies 100, 102 are angularly oriented such that when the valve spool and valve body 54, 64 are centred and the exciting coil 134 is energized with current of the first direction, the various teeth 152, 154 are facing, and radially aligned with, permanent magnet poles of opposing polarities. As seen in the cross section of Figure 2b, the flux circles the exciting coil 134, crossing the working air gap between the North (N) polarity teeth 154 and the South (S) polarity permanent magnet poles, through the backing ring 136, and back across the working air gap between the North (N) polarity permanent magnet poles and the South (S) polarity teeth 152. This state is magnetically preferred because it presents the lowest reluctance path for the magnetic flux.

However, when there is relative rotation of the valve spool and valve body elements 54, 64, opposite polarity teeth 152, 154 and permanent magnet poles become radially misaligned as depicted in Figure 2c. This increases the reluctance of the flux path as indicated by the flux lines in Figure 2d, and thereby results in the production of a positive magnetic centring torque which tends to restore the assembly to the preferred or centred position.

Analogously, the radially aligned electromagnetic and permanent magnet poles are of like polarity when the exciting coil 134 is energized with current of a second or opposite direction. This produces a repulsive force between the electromagnetic and permanent magnet poles which generates a negative magnetic centring torque when there is relative displacement of the valve spool and valve body 54, 64 which tends to further displace the assembly.

The magnitude of the magnetic centring torque (positive or negative) varies substantially sinusoidally in relation to the degree of misalignment, or relative displacement of the valve spool and valve body 54, 64 and the current supplied to the exciting coil 134. In this illustrated embodiment, the coil current is scheduled in relation to the vehicle speed to provide a speed-dependent relationship between the operator input torque and the power assist torque.

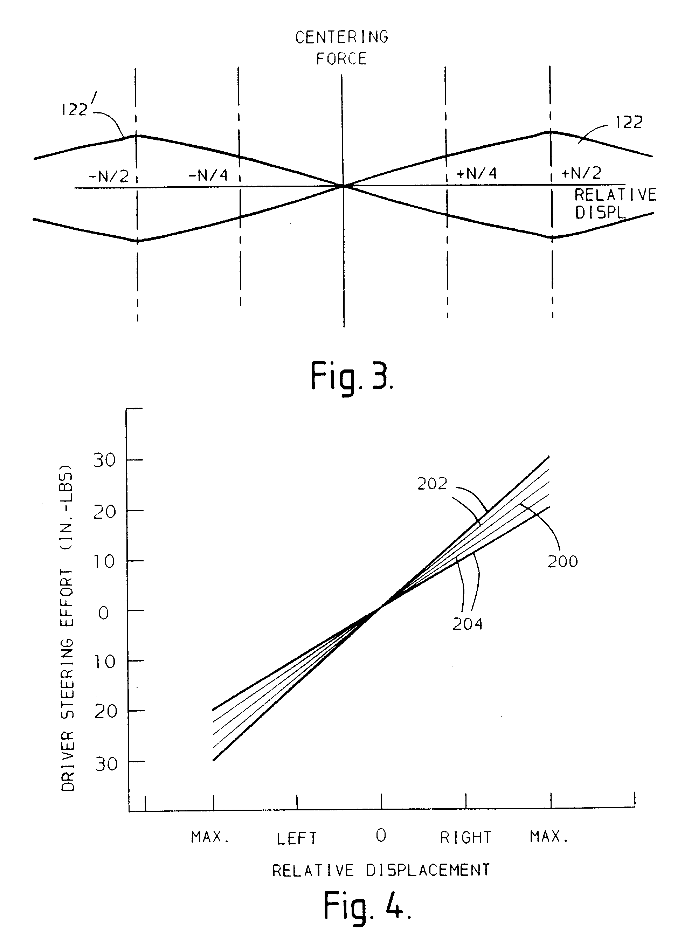

Figure 3 graphically depicts the magnetic centring torque for a given coil current magnitude as a function of relative displacement. The trace 122 depicts positive centring torque and corresponds to coil current of a first direction. Trace 122' depicts negative centring torque and corresponds to coil current of the opposite direction. For the illustrated embodiment where the number of poles N is 40, the force peaks at approximately ± 4.5 mechanical degrees of relative rotation. Further relative rotation is prevented by the lost motion spline coupling between spool shaft 18 and pinion gear 28.

The effective resiliency of the coupling between valve spool 54 and valve body 64 is determined by the sum of the mechanical centring forces of the torsion bar 90 and the magnetic centring force of the electromagnetic mechanism 92 of this invention. The combined centring force is depicted as a function of relative displacement in Figure 4. The torsion bar centring force is fixed for a given installation, but the magnetic centring force is variable with the exciting coil energization current magnitude and direction, and results in an overall centring force as represented by the family of curves shown in Figure 4, and described below.

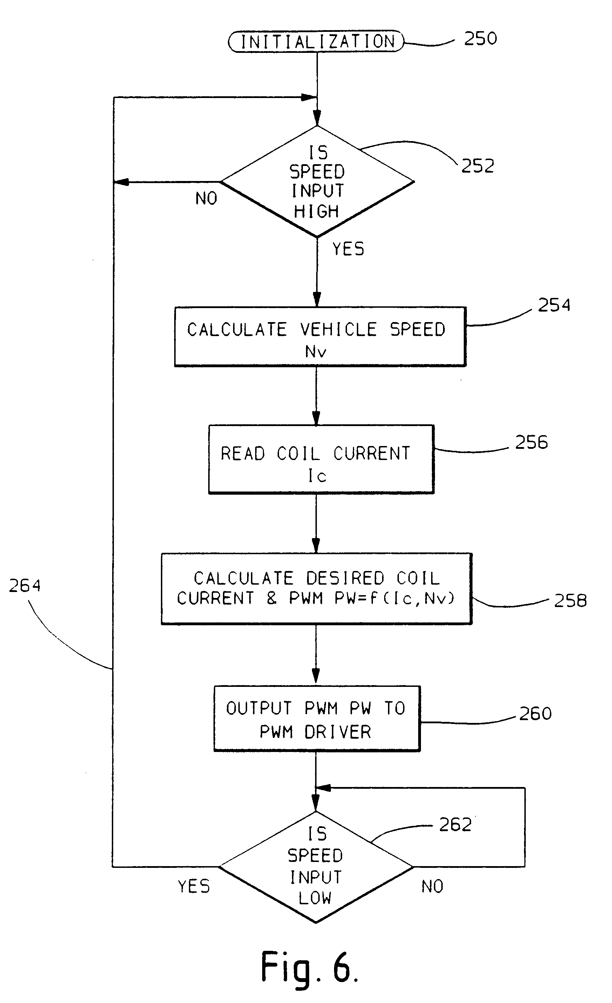

The computer-based control unit 178 of Figure 1 is supplied with operating power from the vehicle storage battery (not shown), and comprises a microcomputer (µC) 180, an input/output (I/O) device 182, an input counter (INP CTR) 184, and a pulse-width-modulation driver (PWM) 186, all of which may be conventional devices. The microcomputer 180 communicates with the remainder of the apparatus via I/O device 182; in response to various input information, microcomputer 180 executes a series of predetermined program instructions for developing an output command pertaining to the required energization of the exciting coil 134. Program instructions are described below in reference to the flow diagram of Figure 6.

The primary control unit input is an oscillatory vehicle speed signal on line 188, which may be obtained from a conventional speed pickup, not shown. The speed signal is applied to the I/O device 182 through the input counter 184, which divides the frequency of the speed signal by a predetermined factor. The PWM command for exciting coil 134 is applied to the bidirectional PWM driver 186 (which may take the form of a conventional H-switch driver) for correspondingly modulating the exciting coil 134 with current from the vehicle storage battery, not shown. A signal indicative of the coil current is developed by the PWM driver 186 on line 176 with a suitable current shunt, such signal being applied as an input to an analogue port of the I/O device 182 for use in a closed-loop control of the coil current. Open-loop voltage control may alternately be employed, if desired.

According to the illustrated embodiment, the combined effect of the torsion bar 90 and the magnetic centring force produces an intermediate level of steering assist, represented by the trace 200 in Figure 4. This level of assist is most suitable for an intermediate vehicle speed such as 48 kph (30 miles per hour). With increasing vehicle speed, the computer based control unit 178 begins energizing the exciting coil 134 with progressively increasing levels of a first polarity current to increase the driver steering effort per unit relative displacement of the valve spool 54 and valve body 64, as indicated by the traces 202. With decreasing vehicle speed, the computer based control unit 178 begins energizing the exciting coil 134 with progressively increasing levels of the opposite polarity current to reduce the driver steering effort per unit relative displacement of the valve spool 54 and valve body 64, as indicated by the traces 204. This produces a variable effort effect since the level of power assist is directly related to the relative displacement of the valve spool 54 and valve body 64.

The maximum relative displacement limits (MAX) are defined by the splined lost motion coupling between spool shaft 18 and pinion gear 28. Once the maximum displacement has occurred, further rotation of the steering wheel is mechanically transmitted to the pinion gear 28 via the lost motion coupling. In the illustrated embodiment, the lost motion coupling permits relative displacements of approximately ± 4.5 mechanical degrees, the region over which the slope of the magnetic centring force is positive -- that is, the region over which increased relative displacement produces increased magnetic centring force.

It should be recognized, of course, that alternative control methods may be employed. For example, the torsion bar 90 could be omitted entirely, or designed so that the combination of its centring force and the magnetic centring force provides an extreme level of steering assist. In either of such approaches, the computer based control unit 178 would effect unidirectional current control of the exciting coil 134 to adjust the overall resilience of the valve body/valve spool coupling, and the bidirectional PWM driver 186 could be replaced with a unidirectional driver.

Regardless of the control method employed, Figure 6 depicts a simplified flow diagram representative of computer program instructions which would be executed by the computer-based control unit 178 of Figure 1 in carrying out the control. The block 250 designates a series of program instructions executed at the initiation of each period of vehicle operation for initializing the various registers and program variable to predetermined values. Thereafter, the blocks 252 - 262 are executed as explained below.

The decision blocks 252 and 262 detect a low to high transition of the vehicle speed signal output of input counter 184. When the transition is detected, the instruction blocks 254, 256, 258 and 260 are sequentially executed to calculate the vehicle speed Nᵥ, to read the coil current value I_{c}, and to calculate and output a PWM pulse width to the PWM driver 186. Calculation of the vehicle speed at block 254 is based on the elapsed time between low-to-high transitions of the input counter carry bit, such time being inversely proportional to vehicle speed Nᵥ. Calculation of the PWM pulse width command is based on the deviation of the desired coil current from the measured coil current I_{c}, the desired current being determined in accordance with vehicle speed, as indicated in Figure 4.

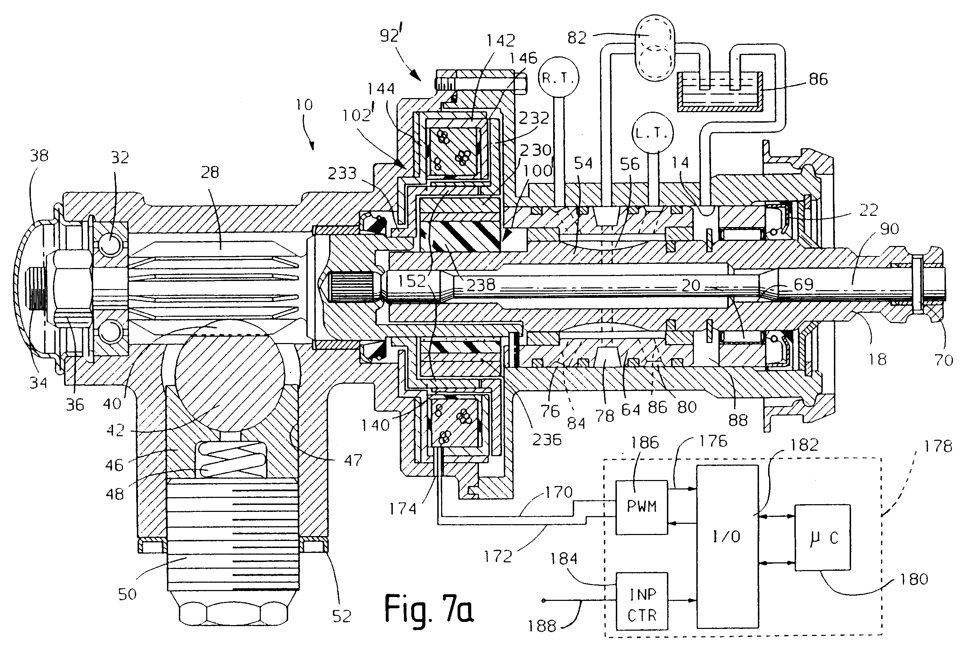

Figures 7a-7b depict a second embodiment of this invention, and like parts have been given the same reference numeral. In this case the electromagnetic mechanism 92' comprises first and second magnetic assemblies generally designated by the reference numerals 100' and 102'. The first magnetic assembly 100' includes a (rotary multipole permanent) ring magnet 230 supported on valve spool 54 for rotation therewith. The ring magnet 230 has an arrangement as shown in Figure 1c, in which the ring magnet and backing ring 236 are supported for rotation with the valve spool 54 on a non-magnetic spacer 238, which may be moulded onto valve spool 54 at the time of its manufacture.

Alternatively, the ring magnet 230 may be internally magnetized as schematically depicted in Figure 1d. In this case, the ring magnet 230 may be supported directly on the non-magnetic spacer 238.

The second magnetic assembly 102' includes a pair of flux conducting elements 232, 233 supported for rotation with the pinion gear 28 and valve body 64, and the (stationary) exciting coil 134. The flux conducting elements 232, 233 are mechanically coupled by the non-magnetic ring 140, and the flux conducting element 133 is secured to the inboard end of the pinion gear 28 so that the entire magnetic assembly 102' rotates with the valve body 64.

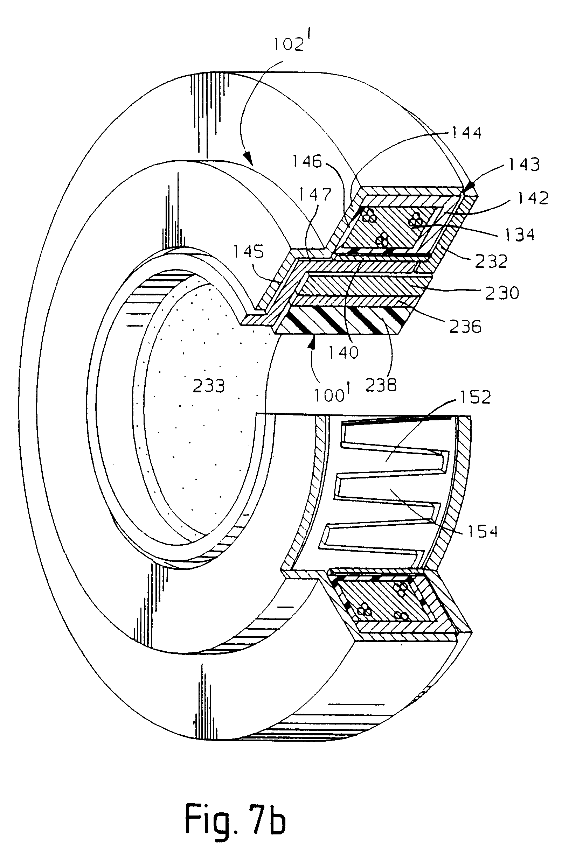

As best seen in the perspective view of Figure 7b, the flux conducting elements 232, 233 each have (N/2 axially extending claw-pole) teeth 152, 154 which interleave to define the total of N electromagnetic poles. The axially and radially extending ends of the flux conducting elements 232, 233 are disposed in close proximity to the (stationary) pole pieces 142, 144 which encircle the exciting coil 134. Specifically, the (stationary) pole piece 142 is coupled to the rotary flux conducting element 232 through a (radially extending) air gap 143, and the (stationary) pole piece 144 is coupled to the rotary flux conducting element 233 through both radially and axially extending air gaps 145 and 147.

Thus, the interleaved teeth 152, 154 of the second magnetic assembly 102' are magnetically coupled to (1) the ring magnet 230 by virtue of their mutual proximity, and (2) the exciting coil 134 by virtue of the coupling between the flux conducting elements 232, 233 and the (stationary encircling) pole pieces 142-144.

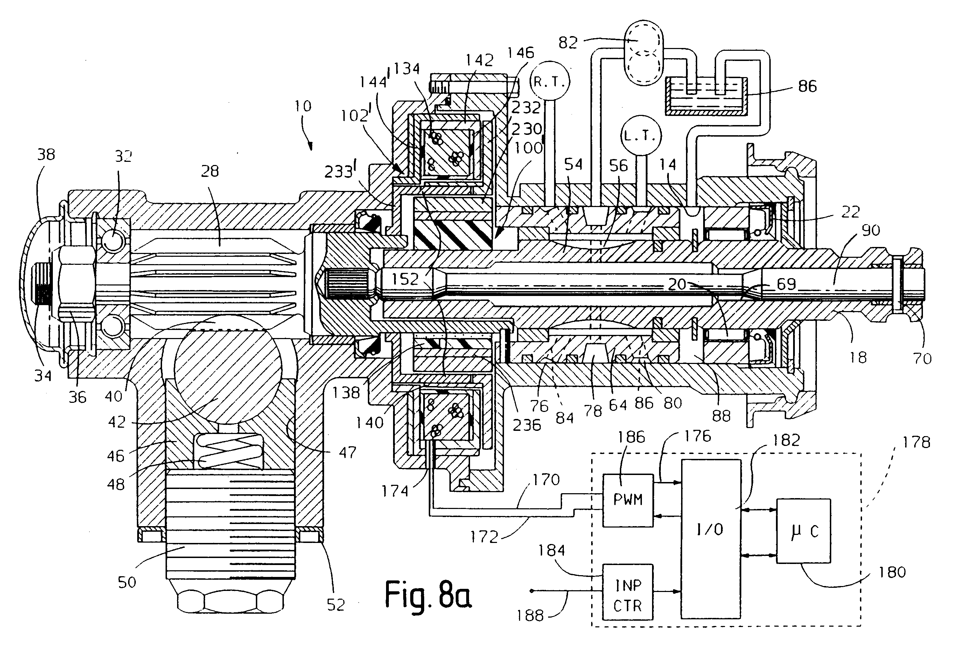

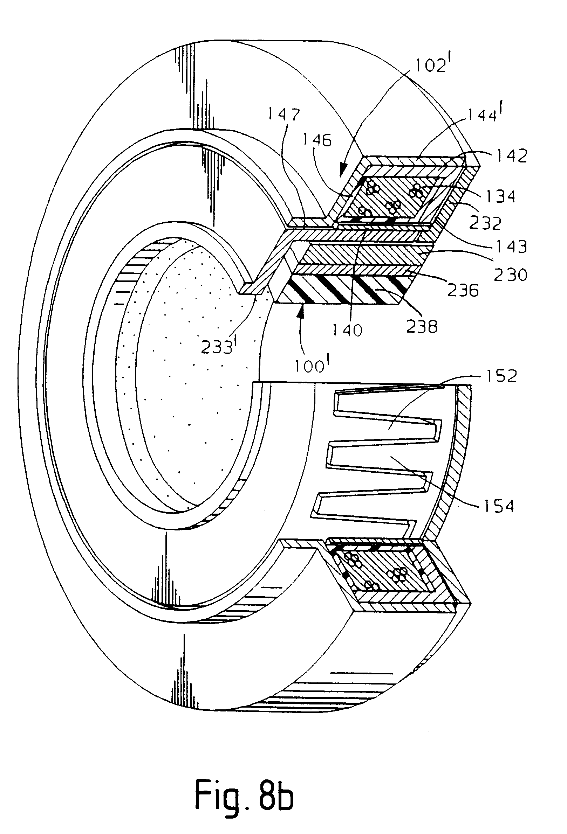

Figures 8a - 8b depict a third embodiment of this invention (similar to that of Figures 7a - 7b) in which the flux conducting element 233' is axially displaced from the first magnetic assembly 100' to minimize the leakage flux therebetween. If the outer profile of the steering gear is maintained, this also necessitates a shortening of the (stationary) pole piece 144' as indicated. In this case, the (stationary) pole piece 144' is coupled to the rotary flux conducting element 233' solely through the axially extending air gap 147. Ideally, the objective is to minimize the leakage flux between ring magnet 230 and flux conducting element 233', while maximizing the coupling between the rotary and stationary flux conducting elements 232, 233'; 142, 144' of the second magnetic assembly 102'. In practice, it may be difficult to fully achieve both objectives due to space limitations.

All other aspects of the second and third embodiments are substantially the same as the first embodiment, and the description with reference to Figures 1c; 1d; 2a-d; 3; 4; and 6 equally apply to the second and third embodiments.

While this invention has been described in reference to the illustrated embodiment, various modifications will occur to those skilled in the art. In essential form, the control apparatus of this invention comprises relatively rotatable electromagnetic and permanent magnet circuits. The function of the circuits can be achieved with alternate (such as disk) configurations, and it should be understood that the scope of this invention is defined solely by the appended claims. Moreover, various control parameters, such as driver preference (light, medium, or heavy effort) or pressure feedback may be used, either separately or in combination with the above-described vehicle speed parameter.

## Claims

1. Hydraulic power assist steering apparatus comprising a pair of hydraulic elements (54,64) which are relatively rotatable and which are connected between a steering shaft (18) and a steering gear (28) such that driver steering effort applied to the steering shaft produces a relative rotation of the hydraulic elements for generating hydraulic flow in relation to the desired level of power assist steering force; apparatus for rotatably coupling the hydraulic elements comprising mechanically resilient means (90) coupling the hydraulic elements to develop a mechanical centring force which is rotationally balanced in the centred relative position of the hydraulic elements, but which resists relative rotation therefrom; permanent magnetic means (100) supported for rotation with one of the pair of hydraulic elements to define a rotary set of alternate polarity permanent magnetic poles; and electromagnetic means (102) including an exciting coil (134), a core (142,144) and a set of electromagnetic pole elements (152,154) disposed in close proximity to the permanent magnetic poles, the electromagnetic pole elements being supported for rotation with the other of said pair of hydraulic elements relative to said permanent magnetic poles; characterised in that the core (142,144) encircles the exciting coil (134) and the electromagnetic pole elements (152,154) are of alternate polarity such that the minimum reluctance electromagnetic flux path between the electromagnetic pole elements and the permanent magnetic poles occurs when the hydraulic elements are in a centred relation for minimum hydraulic flow; and by control means (178) for energizing the exciting coil with direct current to control the magnetic polarity and strength of the electromagnetic poles, whereby the electromagnetic and permanent magnet poles cooperate to produce a variable magnetic centring torque in relation to the displacement of the hydraulic elements and the energization of the exciting coil, and the overall coupling between the hydraulic elements is defined by the combination of the magnetic and mechanical centring torques.

2. Hydraulic power assist steering apparatus as claimed in Claim 1, wherein the control means (178) varies the coil energization in relation to the speed of the vehicle so that the driver steering effort required to produce a given relative rotation of the hydraulic elements (54,64), and hence a given level of power steering force, is variable with the vehicle speed.

3. Hydraulic power assist steering apparatus as claimed in Claim 2, wherein the mechanically resilient means (90) defines a relatively low mechanical centring torque for producing a relatively high level of steering assist flow suitable for relatively low vehicle speeds; and the control means (178) energizes the exciting coil (134) with current of a direction for producing magnetic centring torque which aids the mechanical centring torque for vehicle speeds above said relatively low vehicle speeds, thereby increasing the overall coupling between the hydraulic elements (54,64) and reducing the steering assist flow with increasing speed of the vehicle.

4. Hydraulic power assist steering apparatus as claimed in Claim 2, wherein the mechanically resilient means (90) defines a relatively high mechanical centring torque for producing a relatively low level of steering assist flow suitable for relatively high vehicle speeds; and the control means (178) energizes the exciting coil (134) with current of a direction for producing magnetic centring torque which opposes the mechanical centring torque for vehicle speeds below said relatively high vehicle speeds, thereby decreasing the overall coupling between the hydraulic elements (54,64) and increasing the steering assist flow with decreasing speed of the vehicle.

5. Hydraulic power assist steering apparatus as claimed in Claim 1, wherein the control means (178) is adapted to energize the exciting coil (134) with current of a first direction to produce magnetic centring torque which aids the mechanical centring torque to increase the overall coupling between the hydraulic elements (54,64), and current of the opposite direction to produce magnetic centring torque which opposes the mechanical centring torque to decrease the overall coupling between the hydraulic elements.

6. Hydraulic power assist steering apparatus as claimed in Claim 5, wherein the coupling (90) defined by the mechanical centring torque establishes an intermediate level of steering assist flow suitable for an intermediate vehicle speed; and the control means (178) energizes the exciting coil (134) with current (1) of said first direction for vehicle speeds above said intermediate speed for increasing the overall coupling to reduce the steering assist flow for a given driver steering effort, and (2) of said opposite direction for vehicle speeds lower than said intermediate speed for decreasing the overall coupling to increase the steering assist flow for a given driver steering effort.

7. Hydraulic power assist steering apparatus as claimed in any one of claims 1 to 6, including a valve spool (54) connected for rotation with the steering shaft (18) and defining said one hydraulic element, a valve body (64) connected for rotation with the steering gear (28) and defining said other hydraulic element; means (82) for generating hydraulic flow in relation to the relative rotation of the valve spool (54) and valve body (64); the permanent magnetic means (230) being a ring supported on the valve spool (54) for rotation therewith to define the set of alternate polarity permanent magnet poles about its outer diameter; the electromagnetic means including the flux conducting core (142,144) fixedly supported in a housing (12) about the permanent magnet ring means (230) with the exciting coil (134) disposed therein so that the inner diameter of the exciting coil (134) is facing but radially displaced from the outer diameter of the permanent magnet ring means (230), and rotary flux conducting means supported for rotation with the valve body (64) defining the electromagnetic pole elements in the form of a set of interleaved teeth (152,154) disposed between the outer diameter of the permanent magnet ring means (230) and the inner diameter of the exciting coil (134), and a pair of flux gathering pole surfaces (232,233) disposed on either axial end of the interleaved teeth (152,154), the interleaved teeth (152,154) and flux gathering pole surfaces (232,233) being magnetically coupled to the permanent magnet poles and flux conducting core (142,144), respectively, such that the minimum reluctance flux path between the interleaved teeth (152,154) and permanent magnet poles occurs when the valve spool and valve body (54,64) are in a centred relation for minimum hydraulic flow, and such reluctance increases when the valve spool and valve body (54,64) are relatively displaced from the centred relation, thereby to produce a magnetic centring torque which tends to restore the valve spool and valve body (54,64) to such centred relation.

8. Hydraulic power assist steering apparatus as claimed in Claim 7, wherein the support of the rotary flux conducting means for rotation with the valve body (64) is defined by a mechanical connection between one of the flux gathering pole surfaces and the steering gear (28) at a point axially displaced from the permanent magnet ring means (230).

## Patentansprüche

1. Hydraulische Servolenkungseinrichtung mit einem Paar hydraulischer Elemente (54, 64), die relativ zueinander drehbar und zwischen einer Lenkwelle (18) und einem Lenkritzel (28) befestigt sind, so daß eine vom Fahrer auf die Lenkwelle ausgeübte Lenkkraft eine relative Drehung der hydraulischen Elemente zur Erzeugung eines hydraulischen Flusses im Verhältnis zu dem gewünschten Maß an Servolenkungskraft erzeugt, einer Einrichtung zum Drehkuppeln der hydraulischen Elemente mit einem mechanisch federnden Mittel (90), das die hydraulischen Elemente kuppelt, um eine mechanische Zentrierkraft zu erzeugen, die in der zentrierten relativen Stellung der hydraulischen Elemente im Drehgleichgewicht steht, aber die einer relativen Drehung aus dieser heraus widersteht; einem Permanentmagnetmittel (100), das drehfest mit einem Element des Paares hydraulischer Elemente verbunden ist, um einen drehbaren Satz permanentmagnetischer Pole wechselnder Polarität zu bilden; und einer elektromagnetischen Einrichtung (102) mit einer Erregerspule (134), einem Kern (142, 144) und einem Satz elekrtromagnetischer Polelemente (152, 154), die in enger Nähe zu den permanentmagnetischen Polen angeordnet sind, wobei die elektromagnetischen Polelemente zur Drehung mit dem anderen Element des Paars hydraulischer Elemente relativ zu den permanentmagnetischen Polen getragen ist,
dadurch gekennzeichnet, daß
der Kern (142, 144) die Erregerspule (134) kreisförmig umgibt und die elektromagnetischen Polelemente (152, 154) von wechselnder Polarität sind, so daß der minimale elektromagnetische Reluktanzflußpfad zwischen den elektromagnetischen Polelementen und den permanentmagnetischen Polen auftritt, wenn sich die hydraulischen Elemente in einer zentrierten Relation für einen minimalen hydraulischen Fluß befinden; und daß sie weiterhin eine Steuereinrichtung (178) zur Erregung der Erregerspule mit Gleichstrom aufweist, um die magnetische Polarität und Stärke der elektromagnetischen Pole zu steuern, wodurch die elektromagnetischen und die permanentmagnetischen Pole zusammenarbeiten, um ein änderbares magnetisches Zentrierdrehmoment im Verhältnis zu der Verschiebung der hydraulischen Elemente und der Erregung der Erregerspule zu erzeugen, und die ganze Kupplung zwischen den hydraulischen Elementen durch die Kombination der magnetischen und mechanischen Zentrierdrehmomente definiert ist.

2. Hydraulische Servolenkungseinrichtung nach Anspruch 1, bei der die Steuereinrichtung (178) die Spulenerregung im Verhältnis zu der Fahrzeuggeschwindigkeit ändert, so daß die Lenkkraft, die vom Fahrer ausgeübt wird, um eine vorgegebene relative Drehung der hydraulischen Elemente (54, 64) und damit ein vorgegebenes Maß an Lenkungsunterstützung zu erzeugen mit der Fahrzeuggeschwindigkeit veränderbar ist.

3. Hydraulische Servolenkungseinrichtung nach Anspruch 2, bei der das mechanisch federnde Mittel (90) ein relativ niedriges mechanisches Zentrierdrehmoment zur Erzeugung eines relativ hohen Maßes an Lenkunterstützungskraft bildet, das für relativ niedrige Fahrzeuggeschwindigkeiten geeignet ist; und die Steuereinrichtung (178) die Erregerspule (134) mit Strom einer Richtung erregt, um ein magnetisches Zentrierdrehmoment zu erzeugen, das das mechanische Zentrierdrehmoment bei Fahrzeuggeschwindigkeiten, die oberhalb der relativ niedrigen Fahrzeuggeschwindigkeiten liegen, unterstützt, wodurch die gesamte Kupplung zwischen den hydraulischen Elementen (54, 64) verstärkt und der Lerkungsunterstützungsfluß mit ansteigender Fahrzeuggeschwindigkeit verringert wird.

4. Hydraulische Servolenkungseinrichtung nach Anspruch 2, bei der das mechanisch federnde Mittel (90) ein relativ hohes mechanisches Zentrierdrehmoment zur Erzeugung eines relativ niedrigen Maßes an Lenkunterstützungskraft bildet, das für relativ hohe Fahrzeuggeschwindigkeiten geeignet ist; und die Steuereinrichtung (178) die Erregerspule (134) mit Strom einer Richtung erregt, um ein magnetisches Zentrierdrehmoment zu erzeugen, das dem mechanischen Zentrierdrehmoment bei Fahrzeuggeschwindigkeiten, die unterhalb der relativ niedrigen Fahrzeuggeschwindigkeiten liegen, entgegenwirkt, wodurch die gesamte Kupplung zwischen den hydraulischen Elementen (54, 64) geschwächt und der Lenkungsunterstützungsfluß mit abnehmender Fahrzeuggeschwindigkeit vergrößert wird.

5. Hydraulische Servolenküngseinrichtung nach Anspruch 1, bei der die Steuereirrichtung (178) die Erregerspule (134) mit einem Strom einer ersten Richtung zur Erzeugung eines magnetischen Zentrierdrehmoments, das das mechanische Zentrierdrehmoment unterstützt, um die gesamte Kupplung zwischen den hydraulischen Elementen (54, 64) zu verstärken, und mit einem Strom der entgegengesetzten Richtung zur Erzeugung eines magnetischen Zentrierdrehmoments, das dem mechanischen Zentrierdrehmoment entgegenwirkt, um die gesamte Kupplung zwischen den hydraulischen Elementen (54, 64) zu schwächen, erregt.

6. Hydraulische Servolenkungseinrichtung nach Anspruch 5, bei der die durch das mechanische Zentrierdrehmoment gebildete Kupplung (90) ein mittleres Maß an Lenkungsunterstützungsfluß schafft, das für eine mittlere Fahrzeuggeschwindigkeit geeignet ist; und die Steuereinrichtung (178) die Erregerspule (134) mit Strom erregt, der (1) eine erste Richtung für Fahrzeuggeschwindigkeiten oberhalb der mittleren Fahrzeuggeschwindigkeit aufweist, um die gesamte Kupplung zur Verringerung des Lenkungsunterstützungsflusses für eine gegebene Fahrerlenkkraft zu verstärken, und der (2) eine entgegengesetzte Richtung für Fahrzeuggeschwindigkeiten unterhalb der mittleren Fahrzeuggeschwindigkeit aufweist, um die gesamte Kupplung zur Vergrößerung des Lenkungsunterstützungsflusses für eine gegebene Fahrerlenkkraft zu schwächen.

7. Hydraulische Servolenkungseinrichtung nach einem der Ansprüche 1 bis 6 mit einer Ventilspule (54), die drehfest mit der Lenkwelle (18) verbunden ist und ein hydraulisches Element bildet, einem Ventilkörper (64), der drehfest mit dem Lenkritzel (28) verbunden ist und das andere hydraulische Element bildet; einer Einrichtung (82) zur Erzeugung eines hydraulischen Flusses im Verhältnis zu der Drehung zwischen der Ventilspule (54) und dem Ventilkörper (64); wobei die Permanentmagneteinrichtung (230) ein an der Ventilspule (54) drehfest getragener Ring ist, um einen Satz von Permanentmagnetpolen wechselnder Polarität an seinem Außendurchmesser zu bilden; wobei die elektromagnetische Einrichtung den flußleitenden Kern (142, 144), der fest in einem Gehäuse (12) um die Permanentmagnetringeinrichtung (230) mit der darin enthaltenen Erregerspule gehalten ist, so daß der Innendurchmesser der Erregerspule (134) dem Außendurchmesser der Permanentmagnetringeinrichtung (230) zugewandt aber in Radialrichtung von diesem versetzt sich, und einer drehbaren flußleitenden Einrichtung, die zur Drehung mit dem Ventilkörper (64) gehalten sind und die elektromagnetischen Polelemente in der Form eines Satzes von überlappenden Zähnen (152, 154) bildet, die zwischen dem Außendurchmesser der Permanentmagnetringeinrichtung (230) und dem Innendurchmesser der Erregerspule (134) angeordnet sind, und einem Paar von flußsammelnden Polflächen (232, 233), die an den axialen Enden der überlappenden Zähne (152, 154) angeordnet sind, wobei die überlappenden Zähne (152, 154) und die flußsammelnden Polflächen (232, 233) magnetisch mit den Permanentmagnetpolen bzw. dem flußleitenden Kern (142, 144) gekuppelt sind, so daß der minimale Reluktanzflußpfad zwischen den überlappenden Zähnen (152, 154) und den Permanentmagnetpolen auftritt, wenn die Ventilspule und der Ventilkörper (34, 64) sich in einer zentrierten Relation für einen minimalen hydraulischen Fluß befinden, und die Reluktanz ansteigt, wenn die Ventilspule und der Ventilkörper (54, 64) relativ zueinander aus der zentrierten Relation verschoben werden, wodurch ein magnetisches Zentrierdrehmoment erzeugt wird, welches die Ventilspule und den Ventilkörper (54, 64) in die zentrierte Relation zurückstellt.

8. Hydraulische Servolenkungseinrichtung nach Anspruch 7, bei der der Halter der drehbaren flußleitenden Einrichtung zur Drehung mit dem Ventilkörper (64) durch eine mechanische Verbindung zwischen einer der flußsammelnden Polflächen und dem Lenkritzel (28) an einem Punkt, der in Axialrichtung von der Permanentmagnetringeinrichtung (230) versetzt ist, gebildet ist.

## Revendications

1. Dispositif de direction assistée hydraulique comprenant deux éléments hydrauliques (54, 64) qui peuvent tourner l'un par rapport à l'autre et qui sont intercalés entre un arbre de direction (18) et un mécanisme de direction (28) de telle manière que l'effort de direction du conducteur qui est appliqué à l'arbre de direction produise une rotation relative entre les éléments hydrauliques pour engendrer un courant hydraulique en fonction du niveau désiré de force de direction assistée ; un dispositif servant à accoupler les éléments hydrauliques en rotation, qui comprend des moyens mécaniquement élastiques (90) qui accouplent les éléments hydrauliques pour développer une force de centrage mécanique qui est équilibrée en rotation dans la position relative centrée des éléments hydrauliques mais qui résiste à leur rotation relative ; des moyens magnétiques à aimant permanent (100) supportés pour tourner avec l'un des deux éléments hydrauliques afin de définir un jeu rotatif de pôles magnétiques d'aimant permanent de polarités alternées ; et des moyens électromagnétiques (102) comprenant une bobine excitatrice (134), un noyau (142, 144) et un jeu d'éléments polaires électromagnétiques (152, 154), disposés à grande proximité des pôles magnétiques d'aimant permanent, les éléments polaires électromagnétiques étant supportés pour tourner avec l'autre des deux éléments hydrauliques par rapport auxdits pôles magnétiques d'aimant permanent ; caractérisé en ce que le noyau (142, 144) encercle la bobine excitatrice (134) et que les éléments polaires électromagnétiques (152, 154) sont de polarités alternées de sorte que le circuit de flux de plus faible réluctance entre les éléments polaires électromagnétiques et les pôles magnétiques d'aimant permanent se présente lorsque les éléments hydrauliques sont dans des positions relatives centrées pour donner le courant hydraulique minimum ; et comprenant en outre des moyens de commande (178) pour exciter la bobine excitatrice en courant continu pour commander la polarité magnétique et la force des pôles électromagnétiques, de sorte que les pôles électromagnétiques et d'aimant permanent coopèrent pour produire un couple de centrage magnétique variable en fonction du déplacement des éléments hydrauliques et de l'excitation de la bobine excitatrice, et le couple global entre les éléments hydrauliques est défini par la combinaison des couples de centrage magnétique et mécanique.

2. Dispositif de direction assistée hydraulique selon la revendication 1, dans lequel le moyen de commande (178) fait varier l'excitation de la bobine en fonction de la vitesse du véhicule de manière que l'effort de direction exercé par le conducteur, qui est nécessaire pour produire une rotation relative donnée des éléments hydrauliques (54, 64) et, par conséquent un niveau donné de force d'assistance de direction, varie avec la vitesse du véhicule.

3. Dispositif de direction assistée hydraulique selon la revendication 2, dans lequel le moyen mécaniquement élastique (90) définit un couple de centrage mécanique relativement bas pour produire un niveau relativement élevé d'écoulement d'assistance de direction approprié pour des vitesses relativement basses du véhicule ; et le moyen de commande (178) excite la bobine excitatrice (134) avec un courant d'un sens propre à produire un couple de centrage magnétique qui assiste le couple de centrage mécanique pour des vitesses du véhicule supérieures auxdites vitesses relativement basses du véhicule, en accroissant ainsi l'accouplement global entre les éléments hydrauliques (54, 64) et en réduisant l'écoulement d'assistance de direction avec l'accroissement do la vitesse du véhicule.

4. Dispositif de direction assistée hydraulique selon la revendication 2, dans lequel le moyen mécaniquement élastique (90) définit un couple de centrage mécanique relativement élevé pour produire un niveau relativement bas de courant d'assistance de direction approprié pour des vitesses relativement élevées du véhicule ; et le moyen de commande (178) excite la bobine excitatrive (134) avec un courant d'un sens propre à produire un couple de centrage magnétique qui s'oppose au couple de centrage mécanique pour des vitesses du véhicule qui sont inférieures auxdites vitesses relativement élevées du véhicule, en réduisant ainsi le couple global entre les éléments hydrauliques (54, 64) et en accroissant le courant d'assistance de direction avec la diminution de la vitesse du véhicule.

5. Dispositif de direction assistée hydraulique selon la revendication 1, dans lequel le moyen de commande (178) est adapté pour exciter la bobine excitatrice (134) avec un courant d'un premier sens pour produire un couple de centrage magnétique qui assiste le couple de centrage mécanique afin d'accroître le couple global entre les éléments hydrauliques (54, 64) et un courant du sens opposé pour produire un couple de centrage magnétique qui est inverse du couple de centrage mécanique pour réduire le couplage net entre les éléments hydrauliques.

6. Dispositif de direction assistée hydraulique selon la revendication 5, dans lequel l'accouplement (90) défini par le couple de centrage mécanique établit un niveau intermédiaire de courant d'assistance de direction approprié pour une vitesse intermédiaire du véhicule ; et le moyen de commande (178) excite la bobine excitatrice (134) avec un courant (1) dudit premier sens pour des vitesses du véhicule supérieures à ladite vitesse intermédiaire, afin d'accroître le couple global pour réduire le courant d'assistance de direction pour un effort de direction donné du conducteur, et (2), du sens opposé pour des vitesses du véhicule inférieures à la vitesse intermédiaire pour diminuer le couple global afin d'augmenter le débit d'assistance de direction pour un effort donné de direction du conducteur.

7. Dispositif de direction assistée hydraulique selon une quelconque des revendications 1 à 6, comprenant un tiroir (54) de vanne relié pour la rotation à l'arbre de direction (18) et définissant ledit un élément hydraulique, un corps (64) de vanne relié pour la rotation au mécanisme de direction (28) à engrenages et définissant ledit autre élément hydraulique ; des moyens (82) pour engendrer un courant hydraulique fonction de la rotation relative entre le tiroir (54) de vanne et le corps (64) de vanne ; et le moyen magnétique permanent (230) étant une bague portée par le tiroir (54) de vanne pour tourner avec celui-ci pour définir le jeu de pôles d'aimant permanent de polarités alternées sur son diamètre extérieur ; le moyen électromagnétique comprenant le noyau (142, 144) conducteur de flux supporté fixe dans un boîtier (12) autour du moyen annulaire (230) formant aimant permanent, avec la bobine excitatrice (134) disposée à l'intérieur, de sorte que le diamètre intérieur de la bobine excitatrice (134) est placé face au diamètre extérieur du moyen annulaire (230) formant aimant permanent mais espacée radialement de ce diamètre extérieur, et des moyens conducteurs de flux rotatifs montés pour tourner avec le corps (64) de vanne, définissant les éléments polaires électromagnétiques revêtant la forme d'un jeu de dents entrelacées (152, 154) disposées entre le diamètre extérieur du moyen annulaire (230) formant aimant permanent et le diamètre intérieur de la bobine excitatrive (134), et une paire de surfaces polaires (232, 234) collectrices de flux disposées sur les extrémités axiales des dents entrelacées (152, 154), les dents entrelacées (152, 154) et les surfaces polaires (232, 234) collectrices de flux étant couplées magnétiquement aux pôles d'aimant permanent et au noyau (142, 144) conducteur de flux, respectivement, de sorte qu'on obtient le circuit de flux possédant le minimum de réluctance entre les dents entrelacées (152, 154) et les pôles d'aimant permanent lorsque le tiroir de vanne et le corps de vanne (54, 64) sont relativement écartés de leurs positions relatives centrées, en produisant ainsi un couple de centrage magnétique qui tend à rappeler le tiroir de vanne et le corps de vanne (54, 64) à ces positions relatives centrées.

8. Dispositif de direction assistée hydraulique selon la revendication 7, dans lequel le support du moyen conducteur de flux rotatif destiné à tourner avec le corps (64) de vanne est défini par une liaison mécanique entre une des surfaces polaires collectrices de flux et le mécanisme de direction (28) à engrenages en un point espacé axialement du moyen annulaire (230) formant aimant permanent.
